# EUROPEAN PATENT APPLICATION

(11) **EP 1 173 035 A1**
(43) Date of publication of application: **16.01.2002**
(21) Application number: 00305871.6
(22) Date of filing: 12.07.2000
(51) Int. Cl.: H04Q 7/32, H04Q 7/38

(54) **Mobile telephone with means for displaying data rate currently available within its locality**

(71) Applicant: BRITISH TELECOMMUNICATIONS public limited company, London EC1A 7AJ (GB)
(72) Inventor: Johnston, William, Ipswich, Suffolk, IP3 8ST (GB); Harris, Jonathan William, Martlesham Heath, Suffolk, IP12 4TF (GB)
(74) Representative: Lidbetter, Timothy Guy Edwin

(57) **Abstract**

The mobile unit 1 has a measurement system that takes various physical layer measurements, including received power (RxLev), delay time etc for various functions, primarily handover control (3). For the information of the user some of these properties are presented on a visual display 4. To achieve this, a processor 5 converts these measurements into a form in which it can drive the display 4. For example the received signal strength RxLev is used to drive a signal strength display 41. Similarly, the SIR (signal to interference ratio) is used to drive a data rate display 42. In its simplest form this is a numerical value proportional to the reciprocal of the SIR measurement, or a graphical representation thereof.

The measurement unit 2 may extract the SIR measurement from the pilot channel periodically or in response to specific events, for example changes in the ratio of CPICH power and the interference power, or on requests for specific data rates.

## Description

This invention relates to cellular mobile radio systems, and in particular handsets used for transmitting and receiving data, as distinct from making voice calls.

With the development and introduction of new mobile networks it is likely that mechanisms will exist enabling the data rate available to a mobile unit to vary. This will be achieved by requesting information on current bearer capabilities, changing the coding scheme used and/or changing the air interface bearer structure (e.g. moving from a Frequency Division Duplex (FDD) system to a Time Division Duplex (TDD) system). Each coding scheme and bearer service has a theoretical maximum throughput. The highest data rates will generally only be available in close proximity to a base station, as a result of higher quality signal reception (Signal to Interference Ratio).

The decision to move to a scheme that allows higher data rates is taken by co-operation between the network and the mobile device, and a data call may continue as normal as the change takes place. The decision does not require user intervention and allows the optimum data rate to be offered for each cell that the handset interacts with, according to the capacity of each cell. However, to the user it may appear that the bandwidth available from a network is varying erratically, as he moves between areas supporting high and low data rates. This situation could have a negative impact on the user perception of the network quality.

According to the invention, there is provided a mobile telecommunications unit having means for detecting the availability of enhanced data rates within the locality, and means for indicating such availablity to the user. The indication may be by display of an appropriate symbol or bar graph, indicating the data rate available.

The unit may have means for displaying the maximum data rate permitted for use by the unit when such rate is lower than the rate currently available, or it may have means for displaying both the available rate and the permitted rate.

In a code division multiple access system, the mobile unit may determine the signal to interference ratio, and determine the available data rate therefrom. In a time division multiple access system it may determine the number of timeslots in use, and derive the available data rate therefrom. The coding scheme in use may be another factor used in determining the available data rate.

The invention enables a network operator to better manage customers' expectations of bandwidth availability and perception of Quality of Service.

The available data rate may be detected by the mobile unit in one or more of several different ways. The mobile unit, in co-operation with the base station, identifies a suitable coding scheme, and the identity of the coding scheme may be used to drive the data rate indication. The coding scheme can change as the user gets nearer the basestation. Similarly the bearer service may change between FDD (frequency division multiplex) and TDD (time division multiplex) in localised areas.

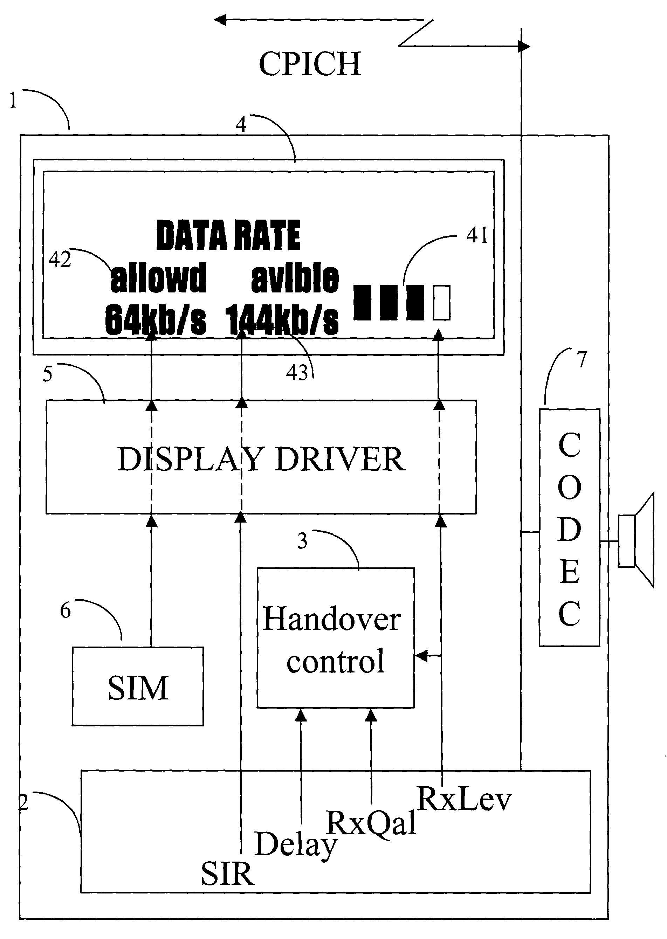

An embodiment will now be described with reference to the accompanying drawing which illustrates a mobile handset equipped with the invention. This embodiment is based on the UMTS CDMA (code division multiple access) system, although this is purely illustrative and the invention may be used with FDD and TDD systems as well.

In the UMTS CDMA system, the base station and mobile unit 1 co-operate to perform a number of measurements. The capacity of a base station is inversely proportional to the interference experienced within the cell it serves, and the bearer rates are variable, depending on the capacity of the base station and the capabilities of the terminal. As well as the simple RxLev and RxQual (level and quality of received signal) used in the earlier GSM standard, these measurements include Signal to Interference Ratio (SIR), which is measured periodically on the Common Pilot Channel (CPICH). The pilot channel is broadcast continually, and provides a measure of the potential capacity of the cell at any point in time. When the terminal requests a data rate, the network either responds by accepting that rate or offers a lower speed alternative,which would be more robust as it will include more error checking.

The mobile unit 1 has a measurement system that takes various physical layer measurements, including transmitted power, received power, delay time etc. These are used for various functions, primarily handover control (3). For the information of the user some of these properties are presented on a visual display 4. To achieve this, a processor 5 converts these measurements into a form in which it can drive the display 4. For example the received signal strength RxLev is used to drive a signal strength display 41. Similarly, the SIR is used to drive a data rate display 42. In its simplest form this will be a numerical value proportional to the reciprocal of the SIR measurement, or a graphical representation thereof.

The measurement unit 2 may extract the SIR measurement from the pilot channel periodically or in response to specific events, for example changes in the ratio of CPICH power and the interference power, or on requests for specific data rates.

Customers may specify in advance the specific values of SIR which cause the terminal to be switched to a more robust, but slower, coding scheme, and these may vary from one customer to another, according to the nature of the data the customer intends to use. Thus, the actual data rate available for a given SIR may vary between customers. This factor can be taken account of by the measurement unit 2, which can monitor the actual coding scheme used, or by the display driver taking the relevant information from the SIM 6.

The operator may wish to limit the data rates that users can request, as this has a major impact on the number of subscribers supported, and there may also be operator mechanisms to limit data rates to certain subscribers - for example a 64kb/s maximum rate may available for a cheaper subscription than is requred for a 144kb/s rate. This information may be stored on the user's "subscriber identification module", (SIM) the plug-in component which identifies the individual account to which use of the mobile handset is to be charged and what incoming calls are to be routed to that handset. The display driver 5 may be programmed to obtain this figure from the SIM 6 and display this maximum permitted rate (display 43) even when a higher rate would be possible. Alternatively, both the maximum available and the maximum allowed may be displayed 42, 43, as shown in the Figure, so that the subscriber can see whether upgrading to the more expensive subscription would be of benefit to him.

In the General packet radio System (GPRS) both the coding scheme used (selected by the network) and the number of timeslots available to each user are relevant to the available data rate. If the mobile unit 1 is working on the GPRS system the measurement system 2 monitors the coding system in use, and the number of timeslots it is using, to generate a measure of the ata rate for processing by the dispaly driver 5.

Voice calls are transmitted using a codec 7 at a fixed rate (typically 8kb/s). However the terminal may have the capability to support simultaneous voice and data calls, using multiple bearers. Thus it would be possible to maintain a voice call while having a data call for which the data rate varies according to the available capacity of the serving cells.

In the preferred embodiment, the invention does not require modification to the network. However, it is possible for the calculations required for conversion of the raw data used to detect enhanced data rates to a readable form could be performed elsewhere than in the mobile unit itself, the mobile unit passing the measured data to the calculation unit and receiving the data necessary to drive the display.

## Claims

1. A mobile telecommunications unit having detection means for detecting the data rate currently available within its locality, and display means for indicating such availablity to the user.

2. A mobile telecommunications unit according to claim 1, having means for displaying the maximum data rate permitted for use by the unit when such rate is lower than the rate currently available.

3. A mobile telecommuniucations unit according to claim 2, having means for displaying both the available rate and the permitted rate.

4. A mobile telecommunications unit according to any preceding claim, wherein the mobile unit operates according to a code division multiple access system, and has means for determining the signal to interference ratio, and means for determining the available data rate therefrom.

5. A mobile telecommunications unit acording to claim 1, 2 or 3, wherein the mobile unit operates according to a time division multiple access system and has means for determining the number of timeslots in use, and means for determining the available data rate therefrom.

6. A mobile telecommunications unit according to claim 4 or claim 5, having means for determining the coding scheme in use and determining therefrom the available data rate.
